# EUROPÄISCHE PATENTSCHRIFT

(11) **EP 4 252 333 B1**
(45) Veröffentlichungstag und Bekanntmachung des Hinweises auf die Patenterteilung: **12.08.2026**
(21) Anmeldenummer: 21819790.3
(22) Anmeldetag: 24.11.2021
(51) Int. Cl.: H02K 1/16, H02K 29/03

(54) **STATORKERN FÜR EINEN STATOR EINER ELEKTRISCHEN MASCHINE UND VERFAHREN ZUR HERSTELLUNG EINES SOLCHEN, STATOR FÜR EINE ELEKTRISCHE MASCHINE SOWIE ELEKTRISCHE MASCHINE ZUM ANTREIBEN EINES FAHRZEUGS**
STATOR CORE FOR A STATOR OF AN ELECTRIC MACHINE, METHOD FOR PRODUCING SUCH A STATOR FOR AN ELECTRIC MACHINE, AND ELECTRIC MACHINE FOR DRIVING A VEHICLE
NOYAU DE STATOR POUR UN STATOR D'UNE MACHINE ÉLECTRIQUE, PROCÉDÉ DE FABRICATION D'UN TEL STATOR POUR UNE MACHINE ÉLECTRIQUE, ET MACHINE ÉLECTRIQUE POUR ENTRAÎNER UN VÉHICULE

(30) Priorität: 26.11.2020 DE 102020214895
(43) Veröffentlichungstag der Anmeldung: 04.10.2023
(73) Patentinhaber: Valeo Electrification, 95892 Cergy Pontoise (FR)
(72) Erfinder: SIEPKER, Carsten, 97616 Bad Neustadt a.d.Saale (DE)
(74) Vertreter: Valeo Powertrain Systems
(86) Internationale Anmeldenummer: PCT/EP2021/082747
(87) Internationale Veröffentlichungsnummer: WO 2022/112282

(56) Entgegenhaltungen:
- WO-A1-2012/026158
- CN-B- 103 427 508
- DE-C- 648 106
- US-A1- 2012 019 096
- US-A1- 2016 126 789
- US-A1- 2018 115 202
- US-B2- 10 784 749

## Beschreibung

Die vorliegende Erfindung betrifft einen Statorkern für einen Stator einer elektrischen Maschine.

Daneben betrifft die Erfindung ein Verfahren zur Herstellung eines Statorkerns, einen Stator für eine elektrische Maschine und eine elektrische Maschine zum Antreiben eines Fahrzeugs.

Beim Betrieb einer elektrischen Maschine ist das Auftreten von Rastmomenten wegen einer daraus resultierenden Drehmomentwelligkeit unerwünscht. Es wurde bereits vorgeschlagen, einen Stator und/oder ein Rotor einer solchen elektrischen Maschine geschrägt bzw. gestuft-geschrägt auszubilden, um die Rastmomente zu reduzieren. Insbesondere bei Statoren mit einer Haarnadelwicklung als Statorwicklung, die sich bei automotiven Anwendungen wegen ihrer Fertigungsfreundlichkeit großer Beliebtheit erfreuen, ist eine Schrägung des Stators herkömmlicherweise sehr schwierig zu realisieren, weil die Statorwicklung ausbildende Formleiter typischerweise parallel entlang einer Rotationsachse der elektrischen Maschine ausgebildet sind und daher eine Schrägung des Stators nicht ohne Weiteres nachverfolgen können.

DE 648 106 C offenbart einen Ein- oder Mehrphasen-Wechselstrommotor, bei dem Ständer- oder Läufernutenschlitze um genau eine Viertel-Nutteilung wechselweise versetzt sind, um Reluktanzschwankungen im Luftspalt symmetrisch zu kompensieren; CN 103 427 508 B offenbart einen Motor mit segmentiert schräg gestellten Nutschlitzen und konzentrierter Wicklung, bei dem Permanentmagnete und axial abgestufte Statorkerbnuten (mit definierten Sm/Sc- und τm/τ-Verhältnissen) zur Reduzierung des Rastmoments optimiert sind, während gerade Nuten für automatisches Wickeln beibehalten werden; WO 2012 026158 A1 offenbart eine Drehmaschine mit einem Stator, dessen Schlitzöffnungen schräg zur Achse verlaufen und dessen Zahnflansche sich zur Spitze hin verjüngen, sowie ein spezielles Stanzwerkzeug zur Herstellung eines solchen Statorkerns, um Rastmoment und Drehmomentwelligkeit zu verringern und das Drehmoment zu erhöhen.

Der Erfindung liegt die Aufgabe zugrunde, eine demgegenüber verbesserte Möglichkeit zum Betreiben einer elektrischen Maschine, die insbesondere zur einfachen Verwendung einer Haarnadelwicklung geeignet ist, anzugeben.

Diese Aufgabe wird erfindungsgemäß gelöst durch einen Statorkern für einen Stator einer elektrischen Maschine, aufweisend: einen Rotoraufnahmeraum, der den Statorkern entlang einer Axialrichtung durchsetzt; und mehrere Nuten, die in Umfangsrichtung aufeinanderfolgend im Statorkern ausgebildet sind, den Statorkern von einer ersten Stirnseite zu einer gegenüberliegenden zweiten Stirnseite des Statorkerns axial durchsetzen, und jeweils einen Aufnahmeabschnitt, in welchem eine Statorwicklung des Stators aufnehmbar ist, und eine Nutöffnung, welche an einer Radialposition zwischen dem Aufnahmeabschnitt und dem Rotoraufnahmeraum ausgebildet und entlang der Axialrichtung zueinander versetzte relative Winkelpositionen bezüglich des Aufnahmeabschnitts aufweist, aufweisen.

Der erfindungsgemäße Statorkern für einen Stator einer elektrischen Maschine weist eine Rotoraufnahmeraum auf. Der Rotoraufnahmeraum durchsetzt den Statorkern entlang einer Axialrichtung. Der erfindungsgemäße Statorkern weist mehrere Nuten auf. Die Nuten sind in Umfangsrichtung aufeinanderfolgend im Statorkern ausgebildet. Die Nuten durchsetzen den Statorkern von einer ersten Stirnseite zu einer gegenüberliegenden zweiten Stirnseite des Statorkerns axial. Die Nuten weisen jeweils einen Aufnahmeabschnitt auf. Im Aufnahmeabschnitt ist eine Statorwicklung des Stators aufnehmbar. Die Nuten weisen jeweils eine Nutöffnung auf. Die Nutöffnung ist an einer Radialposition zwischen dem Aufnahmeabschnitt und dem Rotoraufnahmeraum ausgebildet. Die Nutöffnung weist entlang der Axialrichtung zueinander versetzte relative Winkelpositionen bezüglich des Aufnahmeabschnitts auf.

Die Erfindung beruht auf der Überlegung, durch eine Veränderung der relativen Winkelpositionen der Nutöffnung entlang der Axialrichtung den Effekt eines geschrägten Statorkerns, bei dem sich die relativen Winkelposition der gesamten Nut entlang der Axialrichtung ändert, zu emulieren. Dadurch ist es möglich, ein Drehfeld eines aus dem erfindungsgemäßen Statorkern gebildeten Stators durch Variation der relativen Winkelpositionen der Nutöffnung gegenüber dem Aufnahmeabschnitt so zu modifizieren, dass Rastmomente und eine daraus folgende Drehmomentwelligkeit vorteilhafterweise reduziert werden können.

Der Aufnahmeabschnitt einer jeweiligen Nut erstreckt sich bevorzugt parallel zu einer Längsachse des Statorkerns. Es wird bevorzugt, wenn der Aufnahmeabschnitt einer jeweiligen Nut über die gesamte axiale Erstreckung der jeweiligen Nut an derselben Winkelposition in Umfangsrichtung liegt. Der Aufnahmeabschnitt weist eine erste Wand und eine der ersten Wand von der ersten Stirnseite aus betrachtetet im Uhrzeigersinn gegenüberliegende zweite Wand auf. Die erste und die zweite Wand des Aufnahmeabschnitts verlaufen insbesondere parallel. Die Nutöffnungen weisen eine erste Wand und eine der ersten Wand von der ersten Stirnseite aus betrachtetet im Uhrzeigersinn gegenüberliegende zweite Wand auf. Die erste und die zweite Wand der Nutöffnungen verlaufen bevorzugt parallel. Vorzugsweise sind die relativen Winkelpositionen der Nutöffnung als Differenz der Winkelposition der ersten Wand der Nutöffnung und der Winkelposition der ersten Wand des Aufnahmeabschnitts bezüglich einer vorgegebenen Winkelposition am Statorkern definiert. Insbesondere bei bezüglich einer radialen ersten Symmetrieachse symmetrisch ausgebildeten Aufnahmeabschnitten und einer entlang der Axialrichtung bezüglich radialer zweiter Symmetrieachsen symmetrisch ausgebildeten Nutöffnung können die relativen Winkelpositionen der Nutöffnung als Differenz der Winkelposition der ersten Symmetrieachse zu einer jeweiligen Winkelpositionen der zweiten Symmetrieachsen definiert sein.

In bevorzugter Ausgestaltung des erfindungsgemäßen Statorkerns sind unmittelbar aufeinanderfolgende Paare der Nuten in Umfangsrichtung äquidistant zueinander ausgebildet. Vorzugsweise weist der Aufnahmeabschnitt eine rechteckige Querschnittsfläche auf. Der Statorkern weist bevorzugt mehrere Zähne auf, die jeweils zwischen einem Paar unmittelbar benachbarter Nuten ausgebildet sind. Der Statorkern kann ferner ein Joch aufweisen, welches an der der Nutöffnungen radial gegenüberliegenden Seite der Nuten ausgebildet ist und eine radiale Begrenzung der Nuten, insbesondere der Aufnahmeabschnitte, ausbildet und/oder die Zähne miteinander magnetisch leitend verbindet. Der erfindungsgemäße Statorkern kann aus einer Vielzahl von axial geschichtet angeordneten Einzelblechen ausgebildet sein. Der Statorkern kann auch als Statorblechpaket bezeichnet werden. Insbesondere sind die Einzelbleche elektrisch gegeneinander isoliert.

In bevorzugter Ausgestaltung befindet sich der Rotoraufnahmeraum radial weiter innen als die Nuten. In bevorzugter Ausgestaltung des erfindungsgemäßen Statorkerns ist der Aufnahmeabschnitt einer jeweiligen Nut mit dem Rotoraufnahmeraum über einen sich durch die Nutöffnung der jeweiligen Nut erstreckenden Freiraum verbunden. Alternativ kann vorgesehen sein, dass die Nutöffnung einer jeweiligen Nut als Pseudonutöffnung ausgebildet ist. Bei der Pseudonutöffnung sind insbesondere die Nutöffnung und der Aufnahmeabschnitt durch den Statorkern voneinander getrennt.

In bevorzugter Ausgestaltung ist bei dem erfindungsgemäßen Statorkern vorgesehen, dass die relativen Winkelpositionen der Nutöffnung von der ersten Stirnseite bis zu einer axialen Zwischenposition zwischen der ersten Stirnseite und der zweiten Stirnseite entlang desselben Umlaufsinns zueinander versetzt sind. Mit anderen Worten erfolgt eine Änderung der relativen Winkelpositionen der Nutöffnung entlang der Axialrichtung jeweils entlang desselben Umlaufsinns. Die axiale Zwischenposition befindet sich vorzugsweise mittig zwischen der ersten Stirnseite und der zweiten Stirnseite. Der Umlaufsinn kann von der ersten Stirnseite aus gesehen der Uhrzeigersinn oder der Gegenuhrzeigersinn sein.

Gemäß einer ersten Alternative kann vorgesehen sein, dass die relativen Winkelpositionen der Nutöffnung von der Zwischenposition bis zur zweiten Stirnseite entlang desselben Umlaufsinns wie die relativen Winkelpositionen der Nutöffnung von der ersten Stirnseite bis zur axialen Zwischenposition zueinander versetzt sind. Mit anderen Worten ändern sich die Winkelpositionen der Nutöffnung entlang der Axialrichtung von der ersten Stirnseite bis zur zweiten Stirnseite bei jeder Änderung entlang desselben Umlaufsinns. Bevorzugt weist die Nutöffnung einer jeweiligen Nut von der ersten Stirnseite bis zur zweiten Stirnseite eine Schraubenform, insbesondere mit einer konstanten Steigung, auf.

Gemäß einer zweiten Alternative kann vorgesehen sein, dass die relativen Winkelpositionen der Nutöffnung von der Zwischenposition bis zur zweiten Stirnseite entlang eines Umlaufsinns, der dem Umlaufsinn von der ersten Stirnseite bis zur axialen Zwischenposition entgegengesetzt ist, zueinander versetzt sind. Mit anderen Worten erfolgt die Änderung der relativen Winkelpositionen der Nutöffnung nach Überschreiten der Zwischenposition in axialer Richtung in entgegengesetzter Richtung. Die Nutöffnung nimmt so vom Rotoraufnahmeraum aus betrachtet eine Pfeilform an. Bevorzugt weist die Nutöffnung einer jeweiligen Nut von der ersten Stirnseite bis zur Zwischenposition und von der Zwischenpositionen bis zur zweiten Stirnseite entgegengesetzt orientierte Schraubenformen, insbesondere mit einer konstanten Steigung, auf.

Es wird bei dem erfindungsgemäßen Statorkern ferner bevorzugt, dass die zwei äußersten der relativen Winkelpositionen der Nutöffnung um einen Winkelabstand beabstandet sind, der 50 Prozent bis 100 Prozent eines Winkelabstandzweier unmittelbar benachbarten Nuten des Statorkerns beträgt. Durch einen Abstand um 100 Prozent des Winkelabstands der unmittelbar benachbarten Nuten lässt sich eine Schrägung um eine ganze Nutteilung des Stators realisieren, was eine besonders effiziente Reduktion der Rastmomente erlaubt. Dies wird insbesondere bei der zuvor beschriebenen ersten Alternative bevorzugt. Durch einen Winkelabstand, der geringer ist, beispielsweise 50 Prozent bis 80 Prozent des Winkelabstands der unmittelbar benachbarten Nuten beträgt, kann bei zusätzlicher Verwendung einer Bruchlochwicklung oder eines geschrägten Rotors, eine entsprechende Reduktion der Rastmomente erzielt werden. Dies wird insbesondere bei der zuvor beschriebenen zweiten Alternative bevorzugt.

Besonders bevorzugt sind die relativen Winkelpositionen der Nutöffnung zwischen den zwei äußersten der relativen Winkelpositionen der Nutöffnung gleichmäßig verteilt.

Erfindungsgemäß ist vorgesehen, dass an einer ersten der zwei äußersten relativen Winkelpositionen der Nutöffnung die erste Wand des Aufnahmeabschnitts zwischen der ersten Wand und der zweiten Wand der Nutöffnung liegt und an einer zweiten der zwei äußersten relativen Winkelpositionen der Nutöffnung die zweite Wand des Aufnahmeabschnitts zwischen der ersten Wand und der zweiten Wand der Nutöffnung liegt. Dadurch kann sich die Schrägung auch über die Winkelpositionen der ersten Wand und der zweiten Wand des Aufnahmeabschnitts hinaus erstrecken.

Alternativ ist erfindungsgemäß vorgesehen, dass an den zwei äußersten relativen Winkelpositionen der Nutöffnung ein durch die Wände des Aufnahmeabschnitts aufgespannter erster Winkelbereich und ein durch die Wände der Nutöffnung aufgespannter zweiter Winkelbereich überscheidungsfrei sind und die Nutöffnung an den zwei äußersten relativen Winkelpositionen außerhalb des ersten Winkelbereichs liegt. Dies wird insbesondere bevorzugt, wenn die Nut einen - weiter unten im Detail erläuterten - Übergangsabschnitt aufweist.

In einem Ausführungsbeispiel, das nicht vom Schutzbereich der vorliegenden Erfindung erfasst ist, ist es möglich, dass die erste Wand und die zweite Wand der Nutöffnungen entlang der Axialrichtung stets zwischen der ersten Wand und der zweiten Wand des Aufnahmeabschnitts liegen. Dann überschreitet die Nutöffnung nicht die Winkelpositionen der Wände des Aufnahmeabschnitts.

Es wird bei dem erfindungsgemäßen Statorkern bevorzugt, wenn der Statorkern entlang der Axialrichtung in mehrere Teilstatorkerne untergliedert ist und sich die relative Winkelposition der Nutöffnung einer jeweiligen Nut beim Übergang von einem Teilstatorkern zum in der Axialrichtung benachbarten Teilstatorkern ändert. Es wird ferner bevorzugt, wenn die Nutöffnungen der Nuten entlang eines jeweiligen Teilstatorkerns parallel zueinander und/oder parallel zur Längsachse des Statorkerns verlaufen.

Dabei kann vorgesehen sein, dass jeder Teilstatorkern durch eine Vielzahl von axial geschichteten Einzelblechen ausgebildet ist. Dadurch kann der Effekt einer stufenweisen Schrägung des Stators realisiert werden. Typischerweise besteht der Statorkern aus wenigstens zwei, bevorzugt wenigstens drei besonders bevorzugt wenigstens vier Teilstatorkernen und/oder aus höchstens 15, bevorzugt höchstens acht, besonders bevorzugt höchstens fünf Teilstatorkernen.

Gemäß einer alternativen Ausgestaltungsvariante ist vorgesehen, dass jeder Teilstatorkern aus genau einem Einzelblech ausgebildet ist. Dadurch lässt sich der Effekt eines kontinuierlich geschrägten Stators erzielen.

In bevorzugter Ausgestaltung ist vorgesehen, dass die relativen Winkelpositionen der Nutöffnungen mehrerer der Nuten innerhalb eines jeweiligen Teilstatorkerns identisch und bei unmittelbar benachbarten Paaren der Teilstatorkerne unterschiedlich sind. Insbesondere sind die relativen Winkelpositionen der Nutöffnungen aller Nuten innerhalb eines jeweiligen Teilstatorkerns identisch und bei unmittelbar benachbarten Paaren der Teilstatorkerne, insbesondere bei allen Teilstatorkernen, unterschiedlich.

Alternativ oder zusätzlich kann vorgesehen sein, dass die relativen Winkelpositionen der Nutöffnungen mehrerer der Nuten innerhalb eines jeweiligen Teilstatorkerns unterschiedlich sind und die Teilstatorkerne zueinander derart in Umfangsrichtung versetzt sind, dass beim Übergang zwischen zwei unmittelbar benachbarten Paaren von Teilstatorkernen eine Änderung der relativen Winkelposition der Nutöffnungen einer jeweiligen der mehreren der Nuten realisiert ist. Dazu kann bei einem jeweiligen Teilstatorkern die Winkelposition der Nutöffnungen mehrerer in Umfangsrichtung unmittelbar aufeinanderfolgende Nuten unterschiedlich ausgebildet sein, sodass bei einem Versatz der Teilstatorkerne in Umfangsrichtung um eine Nutteilung oder um ein Vielfaches einer Nutteilung jeweils die Änderung beim Übergang zwischen den unmittelbar benachbarten Paaren von Teilstatorkernen realisiert wird. Dadurch können insbesondere einheitliche Geometrien der Aufnahmeabschnitte und Nutöffnungen für mehrere Teilstatorkerne verwendet werden, was die Anzahl unterschiedlicher zu fertigen der Einzelbleche vorteilhafterweise reduziert.

Allgemein wird es bei dem erfindungsgemäße Statorkern bevorzugt, wenn die Nutöffnung eine geringere Erstreckung in Umfangsrichtung als der Aufnahmeabschnitt aufweist.

Um eine Verteilung des magnetischen Flussverlaufs im Statorkern zu verbessern kann vorgesehen sein, dass eine jeweilige Nut einen radial zwischen dem Aufnahmeabschnitt und der Nutöffnung angeordneten Übergangsabschnitt aufweist, der den Aufnahmeabschnitt und die Nutöffnung verbindet. Vorzugsweise verläuft damit zumindest eine von zwei Wänden, bevorzugt beide Wände, des Übergangsabschnitts schräg.

Die der Erfindung zugrunde liegende Aufgabe wird ferner gelöst durch ein Verfahren zur Herstellung eines erfindungsgemäßen Statorkerns, wobei ein Werkzeug verwendet wird, welches zum Ausbilden der Nuten, insbesondere durch Stanzen, einen ersten Werkzeugteil zum Ausbilden des Aufnahmeabschnitts einer jeweiligen Nut und einen gegenüber dem ersten Werkzeugteil beweglich angeordneten zweiten Werkzeugteil zum Ausbilden der Nutöffnung an ihren unterschiedlichen relativen Winkelpositionen bezüglich dem jeweiligen Aufnahmeabschnitt aufweist.

Das Ausbilden der Nutöffnungen kann gleichzeitig, insbesondere während desselben Stanzvorgangs, mit dem Ausbilden des Aufnahmeabschnitts erfolgen. Es ist aber auch denkbar, dass der Aufnahmeabschnitt und die Nutöffnungen zeitlich nacheinander, insbesondere durch getrennte Stanzvorgänge, ausgebildet werden.

Die der Erfindung zugrunde liegende Aufgabe wird ferner gelöst durch einen Stator für eine elektrische Maschine, umfassend einen erfindungsgemäßen Statorkern oder einen durch das erfindungsgemäßen Verfahren erhaltenen Statorkern und eine Statorwicklung, die im Aufnahmeabschnitt einer jeweiligen Nut aufgenommen ist. Die Statorwicklung ist bevorzugt eine verteilte Wicklung.

Es wird bei dem erfindungsgemäßen Stator ferner bevorzugt, dass die Statorwicklungen ein gebrochenes, nicht ganzzahliges Verhältnis der Anzahl der Nuten je Pol und Phase aufweist. Dies wird auch als Bruchlochwicklung bezeichnet. Die Anzahl der Nuten je Pol und Phase wird auch als Lochzahl bezeichnet. Das Verhältnis kann beispielsweise 1,5 oder 2,5 betragen. Dies ist insbesondere vorteilhaft in Kombination damit, dass die zwei äußersten der relativen Winkelpositionen um weniger als eine ganze Nutteilung zueinander beabstandet sind, da dann eine weitgehende Optimierung der Reduktion der Rastmomente erzielt werden kann.

Bei dem erfindungsgemäßen Stator wird es ferner bevorzugt, dass die Statorwicklung durch Formleiter ausgebildet ist und im Aufnahmeabschnitt einer jeweiligen Nut eine vorgegebene Anzahl von in Radialrichtung gestapelt angeordneten, sich insbesondere parallel zur Längsachse des Statorkerns ersteckenden, Formleitern aufgenommen ist. Eine solche Statorwicklung kann auch als Haarnadelwicklung bezeichnet werden. Vorzugsweise haben die Formleiter einen, gegebenenfalls abgerundeten, rechteckigen Querschnitt. Die Anzahl der in Radialrichtung gestapelt angeordneten Formleitern kann beispielsweise wenigstens zwei, bevorzugt wenigstens vier, besonders bevorzugt wenigstens sechs betragen und/oder höchstens 16, bevorzugt höchstens zwölf, besonders bevorzugt höchstens acht betragen. Die Formleiter sind bevorzugt durch Kupferstäbe ausgebildet, welche insbesondere nicht biegeschlaff sind. Die Formleiter sind bevorzugt formstabil.

In bevorzugter Ausgestaltung sind Paare der Formleiter durch an den Stirnseiten angeordnete Verbinder derart elektrisch leitend miteinander verbunden, dass wenigstens eine Reihenschaltung von Formleitern je Phase des Stators ausgebildet wird. Bevorzugt sind die Verbinder an einer Stirnseite des Statorkerns durch einstückig mit den durch sie verbundenen Formleitern ausgebildete gebogene Abschnitte ausgebildet. An der anderen Stirnseite weisen die Verbinder bevorzugt eine stoffschlüssige Verbindung von zwei sich an die Formleiter anschließenden, insbesondere einstückig mit den Formleitern ausgebildeten, Verbindungselementen auf.

Die der Erfindung zugrunde liegende Aufgabe wird ferner gelöst durch eine elektrische Maschine zum Antreiben eines Fahrzeugs, umfassend einen erfindungsgemäßen Stator und einen drehbar im Rotoraufnahmeraum gelagerten, insbesondere permanenterregten, Rotor. Die elektrische Maschine kann als Synchronmaschine oder als Asynchronmaschine ausgebildet sein. Bevorzugt ist die elektrische Maschine dazu eingerichtet, einen Teil eines Antriebsstrang des Fahrzeugs auszubilden. Das Fahrzeug kann ein batterieelektrisches Fahrzeug (BEV) oder ein Hybridfahrzeug sein.

Der Rotor der erfindungsgemäßen elektrischen Maschine kann ungeschrägt sein. Dadurch lassen sich die Rastmomente ohne eine fertigungstechnisch aufwändige Schrägung des Rotors realisieren.

Alternativ kann vorgesehen sein, dass der Rotor, insbesondere um eine halbe Nutteilung des Stators, geschrägt ausgebildet ist. Dies wird insbesondere bei dem Stator mit einer Schrägung um eine halbe Nutteilung als Alternative zu einer Bruchlochwicklung bevorzugt. Vorzugsweise ist der Rotor durch zwei zueinander in Umfangsrichtung versetzt angeordnete Rotorteile ausgebildet. Ein Übergang zwischen den Rotorteilen befindet sich insbesondere an der axialen Zwischenposition des Statorkerns. Bevorzugt wird ein solcher Rotor gemeinsam mit der zuvor beschriebenen Pfeilform der Nutöffnungen verwendet. Ein solcher nur eine Stufe zur Schrägung aufweisender Rotor ist gegenüber mehrfach gestuften Rotoren besonders einfach zu fertigen. Insbesondere wenn der Rotor permanenterregt ist, können dabei die Permanentmagnete von beiden axialen Stirnseiten des Rotors aus in diesen eingeführt werden und den Rotor jeweils bis zur Hälfte seiner axialen Erstreckung durchsetzen.

Weitere Vorteile und Einzelheiten der vorliegenden Erfindung ergeben sich aus den im Folgenden beschriebenen Ausführungsbeispielen (außer dort, wo ausdrücklich angegeben ist, dass die Ausführungsform nicht zur vorliegenden Erfindung gehört) sowie anhand der Zeichnungen. Diese sind schematische Darstellungen und zeigen:
- Fig. 1: eine Prinzipskizze eines Längsschnitts eines Ausführungsbeispiels der erfindungsgemäßen elektrischen Maschine mit einem Ausführungsbeispiel des erfindungsgemäßen Stators, der ein Ausführungsbeispiel des erfindungsgemäßen Statorkerns aufweist.
- Fig. 2: eine stirnseitige Detailansicht des Statorkerns gemäß dem ersten Ausführungsbeispiel;
- Fig. 3: eine Detailansichten einer Nut an unterschiedlichen Axialpositionen gemäß dem ersten Ausführungsbeispiel;
- Fig. 4: eine seitliche Detailansicht des Statorkerns gemäß dem ersten Ausführungsbeispiel;
- Fig. 5: eine stirnseitige Detailansicht eines zweiten Ausführungsbeispiels des erfindungsgemäßen Statorkerns;
- Fig. 6: eine Prinzipskizze des axialen Verlaufs der Nutöffnung einer Nut gemäß dem zweiten Ausführungsbeispiel;
- Fig. 7: eine Prinzipskizze des axialen Verlaufs der Nutöffnung einer Nut gemäß einem dritten Ausführungsbeispiel des erfindungsgemäßen Statorkerns;
- Fig. 8: eine stirnseitige Detailansicht eines vierten Ausführungsbeispiels des erfindungsgemäßen Statorkerns; und
- Fig. 9: eine Prinzipskizze eines Fahrzeugs mit einem Ausführungsbeispiel der erfindungsgemäßen elektrischen Maschine.

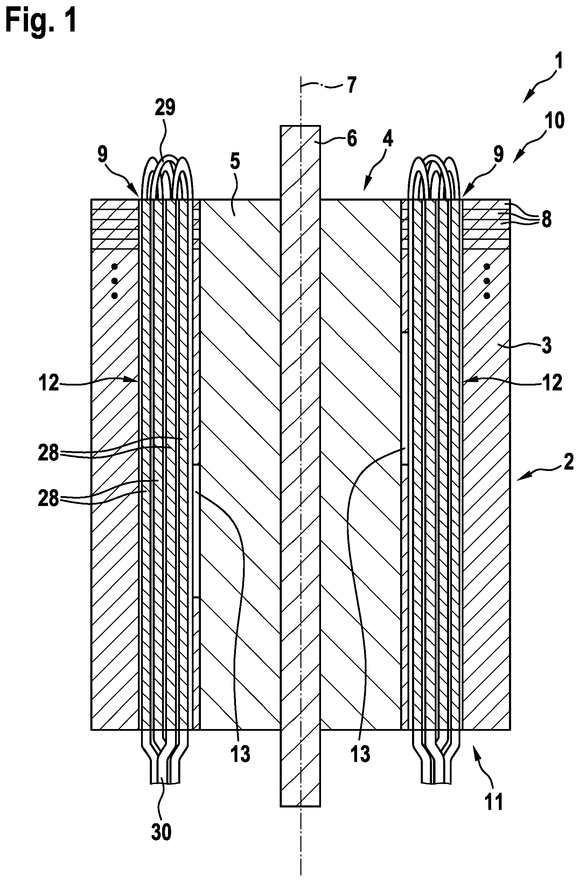

Fig. 1 ist eine Prinzipskizze eines Ausführungsbeispiels einer elektrischen Maschine 1 mit einem Ausführungsbeispiel eines Stators 2, der eines der im Folgenden beschriebenen Ausführungsbeispiele eines Statorkerns 3 aufweist.

Der Statorkern 3 weist einen Rotoraufnahmeraum 4 auf, der den Statorkern 3 entlang einer Axialrichtung durchsetzt. Wie in Fig. 1 ersichtlich ist, ist im Rotoraufnahmeraum 4 ein Rotor 5 der elektrischen Maschine 1 angeordnet, der drehfest mit einer Welle 6 der elektrischen Maschine 1 verbunden ist. Fig. 1 zeigt ferner eine Längsachse 7 des Statorkerns 3, die einer Rotationsachse des Rotors 5 entspricht.

Exemplarisch ist der Statorkern 3 im vorliegenden Ausführungsbeispiel aus einer Vielzahl von axial geschichteten Einzelblechen 8 gebildet, die gegeneinander elektrisch isoliert sind und aus Gründen der Übersichtlichkeit nur teilweise dargestellt sind.

Der Statorkern 3 weist mehrere Nuten 9 auf, die in Umfangsrichtung aufeinanderfolgend im Statorkern 3 ausgebildet sind. Eine Nutteilung entspricht dabei dem Winkelabstand zwischen zwei unmittelbar benachbarten Nuten 9 bzw. dem Quotienten aus 360° und der Anzahl der Nuten 9 des Statorkerns 3. Die Nuten 9 erstrecken sich von einer ersten Stirnseite 10 zu einer gegenüberliegenden zweiten Stirnseite 11 des Statorkerns 3 in axialer Richtung. Die Nuten 9 weisen jeweils einen Aufnahmeabschnitt 12 und eine Nutöffnungen 13 auf.

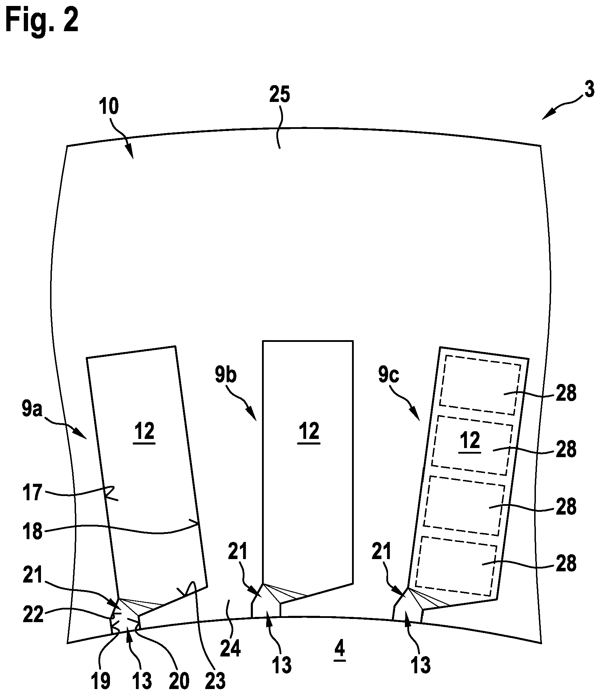

Fig. 2 ist eine stirnseitige Detailansicht des Statorkerns 3 gemäß einem ersten Ausführungsbeispiel. Dazu sind in Fig. 2 drei unmittelbar nebeneinander liegende Nuten 9a-c repräsentativ für die Nuten 9 gezeigt.

Der Aufnahmeabschnitt 12 einer jeweiligen Nut 9a-c erstreckt sich im vorliegenden Ausführungsbeispiel parallel zur Längsachse 7, sodass die Aufnahmeabschnitte 12 entlang der Axialrichtung gerade ausgebildet sind. Die Nutöffnung 13 ist an einer Radialposition zwischen dem Aufnahmeabschnitt 12 und dem Rotoraufnahmeraum 4 ausgebildet.

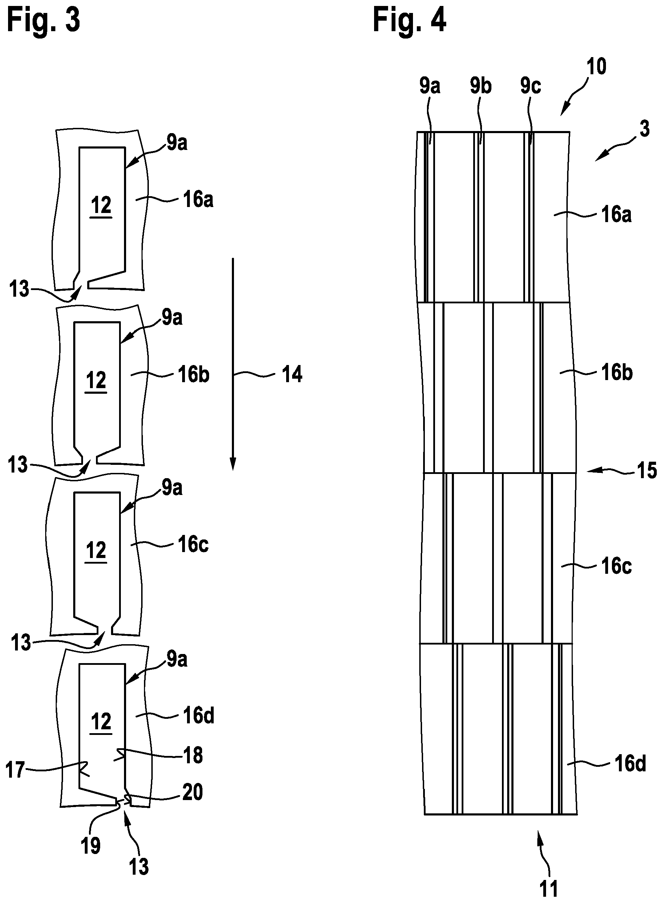

Fig. 3 ist eine Detailansicht der Nut 9a an unterschiedlichen Axialpositionen gemäß dem ersten Ausführungsbeispiel. Fig. 4 ist eine seitliche Detailansicht des Statorkerns 3 gemäß dem ersten Ausführungsbeispiel. Fig. 4 ist dabei eine Ansicht auf eine innere Mantelfläche des Statorkerns 3 aus dem Rotoraufnahmeraum 4.

Wie Fig. 3 zu entnehmen ist, sind relative Winkelpositionen in Umfangsrichtung der Nutöffnung 13 der Nut 9a entlang der Axialrichtung, die in Fig. 3 durch einen von der ersten Stirnseite 10 zur zweiten Stirnseite 11 weisenden Pfeil 14 symbolisiert ist, unterschiedlich. Wie Fig. 4 zu entnehmen ist, sind die relativen Winkelpositionen der Nutöffnung 13 von der ersten Stirnseite 10 bis zu einer axialen Zwischenposition 15, die sich mittig zwischen der ersten Stirnseite 10 und der zweiten Stirnseite 11 befindet, entlang des selben Umlaufsinns, hier exemplarisch im Uhrzeigersinn, zueinander versetzt. Ebenso sind die relativen Winkelpositionen der Nutöffnung 13 von der Zwischenposition 15 bis zur zweiten Stirnseite 11 entlang desselben Umlaufsinns wie die relativen Winkelpositionen der Nutöffnung 13 von der ersten Stirnseite 10 bis zur axialen Zwischenposition 15 zueinander versetzt.

Der Statorkern 3 ist im vorliegenden Ausführungsbeispiel aus mehreren Teilstatorkernen 16a-d gebildet, deren Anzahl hier exemplarisch vier beträgt. Jeder Teilstatorkern 16a-d ist dabei aus einer Vielzahl der Einzelbleche 8 ausgebildet, sodass der Statorkern 3 als gestuft aufgefasst werden kann. Fig. 3 zeigt vier Querschnitte der Nut 9a in den unterschiedlichen Teilstatorkernen 16a-d. Die relativen Winkelpositionen aller Nutöffnungen 13 innerhalb eines jeweiligen Teilstatorkerns 16a-d sind identisch und bei unmittelbar benachbarten Paaren der Teilstatorkerne 16a-d unterschiedlich, nämlich um ein vorgegebenes Winkelinkrement entlang der Umfangsrichtung zueinander versetzt. Jeder Teilstatorkern 16a-d ist folglich aus Einzelblechen 8 mit identischer Geometrie der Nuten 9a-c ausgebildet, wobei die Geometrien der Nuten 9a-c unterschiedlicher Teilstatorkerne 16a-d unterschiedlich sind.

Wieder mit Bezug zu Fig. 2 und erfindungsgemäß weist der Aufnahmeabschnitt 12 einer jeweiligen Nut 9a-c eine erste Wand 17 und eine der ersten Wand im Uhrzeigersinn gegenüberliegende zweite Wand 18 auf. Die Nutöffnung 13 einer jeweiligen Nut weist analog dazu eine erste Wand 19 und eine der ersten Wand 19 im Uhrzeigersinn gegenüberliegende zweite Wand 20 auf. Die relative Winkelposition der Nutöffnungen 13 bezüglich des Aufnahmeabschnitts 12 ist hier als Differenz der Winkelposition der ersten Wand 19 der Nutöffnung 13 und der Winkelposition der ersten Wand 17 des Aufnahmeabschnitts 12 bzw. als Differenz der Winkelposition einer radialen ersten Symmetrieachse A1 des Aufnahmeabschnitts 12 zu einer jeweiligen Winkelposition von radialen zweiten Symmetrieachsen A2 der Nutöffnung 13 bezüglich einer vorgegebenen Winkelposition am Statorkern 3 definiert. An der ersten Stirnseite 10 befindet sich eine äußerste der relativen Winkelpositionen der Nutöffnung 13. Bei dieser äußersten der relativen Winkelpositionen der Nutöffnung 13 befindet sich die erste Wand 17 des Aufnahmeabschnitts 12 zwischen den Wänden 19, 20 der Nutöffnung 13. An der zweiten Stirnseite 11 liegt die andere äußerste relative Winkelposition, hier im Teilblechpaket 16d (siehe Fig. 3). An der zweiten äußersten relativen Winkelposition befindet sich die zweite Wand 18 des Aufnahmeabschnitts 12 zwischen den Wänden 19, 20 der Nutöffnung 13. Zwischen den beiden äußersten der Winkelpositionen der Nutöffnung 13 befindet sich ein Abstand in Umfangsrichtung von etwa drei Vierteln einer Nutteilung.

Ferner ist die Erstreckung der Nutöffnungen 13 einer jeweiligen Nut 9a-c in Umfangsrichtung kleiner als jene des Aufnahmeabschnitts 12. Zwischen der Nutöffnung 13 und dem Aufnahmeabschnitt 12 ist bei einer jeweiligen Nut ein Übergangsabschnitt 21 ausgebildet, der die erste Wand 17 des Aufnahmeabschnitts 12 mit der ersten Wand 19 der Nutöffnung 13 sowie die zweite Wand 18 des Aufnahmeabschnitts 12 mit der zweiten Wand 20 der Nutöffnung 13 verbindet. Der Übergangsabschnitt 21 befindet sich dabei an einer Radialposition zwischen dem Aufnahmeabschnitt 12 und der Nutöffnung 13, wobei Wände 22, 23 des Übergangsabschnitts 21 einen schrägen Verlauf aufweisen.

Wie Fig. 2 zu entnehmen ist, weist der Statorkern 3 zwischen einem jeweiligen Paar benachbarter Nuten 9a-c einen Zahn 24 auf, wobei die Anzahl der Zähne der Anzahl der Nuten 9a-c entspricht. Außerdem weist der Statorkern 3 ein Joch 25 auf, welches eine axiale Begrenzung des Aufnahmeabschnitts 12 einer jeweiligen Nut 9a-c an ihrer der Nutöffnung 13 gegenüberliegenden Seite in Radialrichtung ausbildet und die Zähne 24 miteinander verbindet.

Erfindungsgemäß kann alternativ zwischen den beiden äußersten Winkelpositionen der Nutöffnung 13 auch ein größerer Abstand in Umfangsrichtung vorgesehen sein, beispielsweise entsprechend einer ganzen Nutteilung.

Dabei sind an den zwei äußersten relativen Winkelpositionen der Nutöffnung 13 ein durch die Wände 17, 18 des Aufnahmeabschnitts 12 aufgespannter erster Winkelbereich und ein durch die Wände 19, 20 der Nutöffnung 13 aufgespannter zweiter Winkelbereich überscheidungsfrei, sodass die Nutöffnung 13 an den zwei äußersten Winkelpositionen außerhalb des ersten Winkelbereichs liegt.

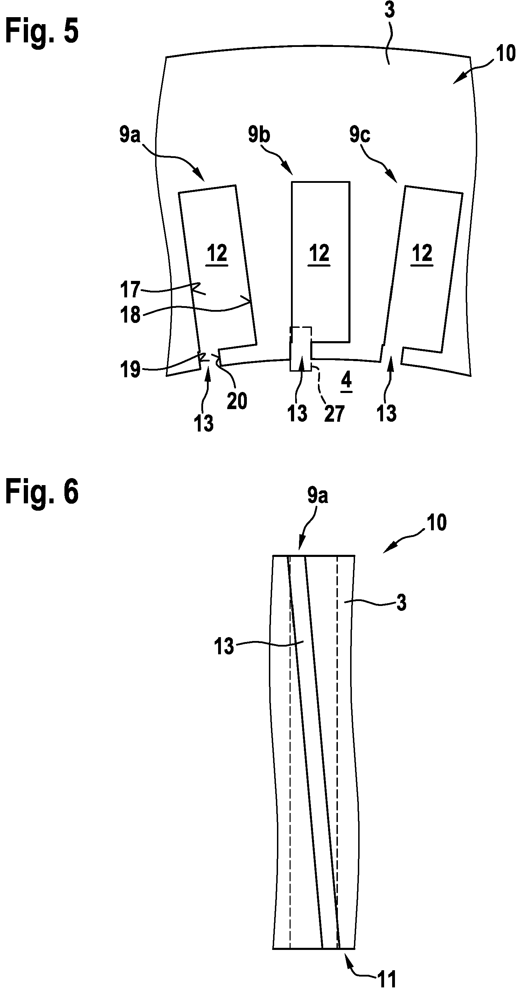

Fig. 5 ist eine stirnseitige Detailansicht eines zweiten Ausführungsbeispiels eines Statorkerns 3. Dabei lassen sich alle Ausführungen zum ersten Ausführungsbeispiel auf das zweite Ausführungsbeispiel übertragen, soweit im Folgenden nichts Abweichendes beschrieben ist. Gleiche oder gleichwirkende Komponenten sind dabei mit identischen Bezugszeichen versehen.

Bei dem Ausführungsbeispiel gemäß Fig. 5 reichen die Nutöffnungen 13 an ihren äußersten relativen Winkelpositionen nur unwesentlich über die Wände 17, 18 des Aufnahmeabschnitts 12 hinaus. Gemäß einem alternativen, nicht erfindungsgemäßen, Ausführungsbeispiel befinden sich die Wände 19, 20 der Nutöffnungen 13 über ihre gesamte axiale Erstreckung stets zwischen den Wänden 17, 18 des Aufnahmeabschnitts 12. Bei dem zweiten Ausführungsbeispiel ist darüber hinaus auch kein Übergangsabschnitt vorgesehen, sodass bei der jeweiligen Nut 9 a bis 9 c der Aufnahmeabschnitt 12 in Radialrichtung unmittelbar in die Nutöffnungen 13 übergeht.

Fig. 6 ist eine Prinzipskizze des axialen Verlaufs der Nutöffnungen 13 der Nut 9a gemäß dem zweiten Ausführungsbeispiel.

Beim zweiten Ausführungsbeispiel ist jeder Teilstatorkern (ohne Bezugszeichen) durch genau ein Einzelblech 8 (siehe Fig. 1) ausgebildet, sodass sich ein kontinuierlicher Verlauf einer Schrägung bzw. eine kontinuierliche Änderung der relativen Winkelposition der Nutöffnung 13 gegenüber dem Aufnahmeabschnitt 12 von der ersten Stirnseite 10 zur zweiten Stirnseite 11 entlang des Uhrzeigersinn oder bei einem alternativen Ausführungsbeispiel im Gegenuhrzeigersinn ergibt. Die Nutöffnungen 13 weist dadurch von der ersten Stirnseite 10 bis zur zweiten Stirnseite 11 eine Schraubenform mit einer konstanten Steigung auf.

Beim zweiten Ausführungsbeispiel befindet sich zwischen den beiden äußersten der Winkelpositionen der Nutöffnung 13 ein Abstand von etwas einer halben Nutteilung.

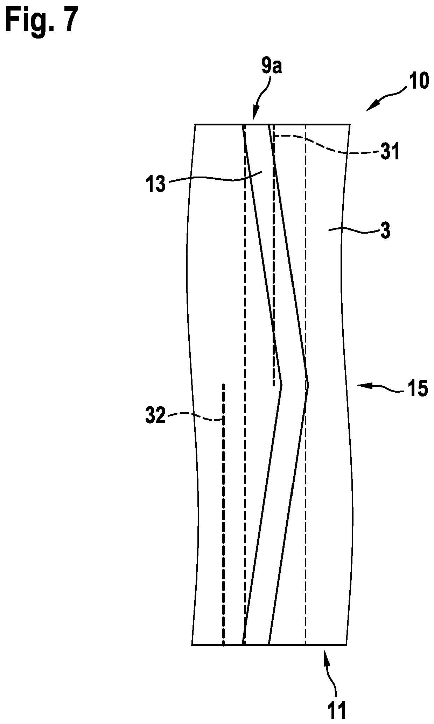

Fig. 7 ist eine Prinzipskizze des axialen Verlaufs der Öffnung 13 der Nut 9a gemäß einem dritten Ausführungsbeispiel eines Statorkerns 3. Das dritte Ausführungsbeispiel entspricht dabei dem zweiten Ausführungsbeispiel, soweit im Folgenden nichts Abweichendes beschrieben ist. Gleiche oder gleichwirkende Komponenten sind dabei mit identischen Bezugszeichen versehen.

Beim dritten Ausführungsbeispiel sind die relativen Winkelpositionen der Nutöffnung 13 von der Zwischenposition 15 bis zur zweiten Stirnseite 11 entlang eines Umlaufsinns, der dem Umlaufsinn von der ersten Stirnseite 10 bis zur axialen Zwischenposition 12 entgegengesetzt ist, zueinander versetzt. Hier sind die Winkelposition von der Zwischenposition 15 bis zur zweiten Stirnseite 11 im Gegenuhrzeigersinn versetzt. Dadurch weist die Nutöffnungen 13 von der ersten Stirnseite 10 bis zur Zwischenposition 15 eine Schraubenform und von der Zwischenposition 15 bis zur zweiten Stirnseite 11 eine gegensinnig orientierte Schraubenform auf, wobei die Steigungen beider Schraubenformen identisch sind. Dadurch wird vom Rotoraufnahmeraum 4 aus gesehen eine Pfeilform der Nutöffnungen 13 realisiert.

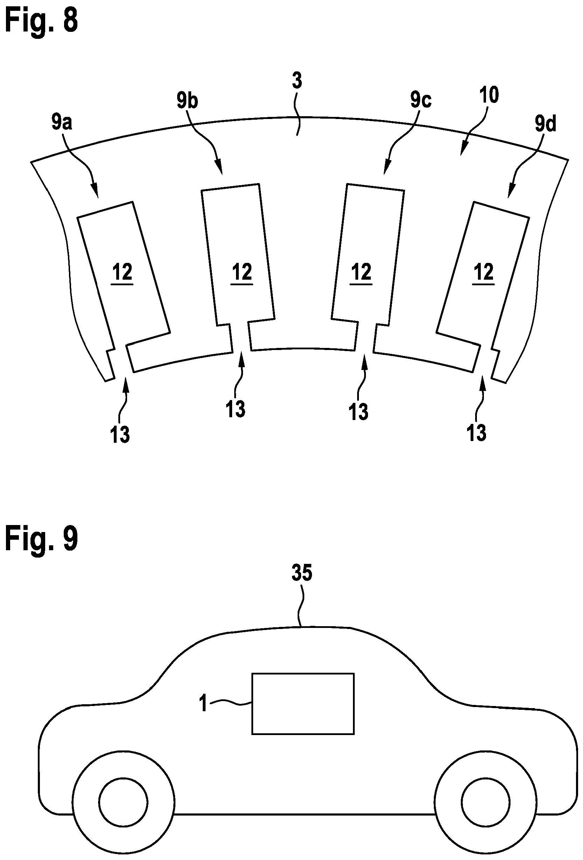

Fig. 8 ist eine stirnseitige Detailansicht eines vierten Ausführungsbeispiels des Statorkerns 3. Das vierte Ausführungsbeispiel entspricht dabei dem ersten Ausführungsbeispiel soweit im Folgenden nichts Abweichendes beschrieben ist. Dabei sind gleiche oder gleichwirkende Komponenten mit identischen Bezugszeichen versehen.

Beim vierten Ausführungsbeispiel sind die relativen Winkelpositionen der Nutöffnungen 13 mehrerer Nuten 9a-d innerhalb eines jeweiligen Teilstatorkerns 16a-d (siehe Fig. 4) unterschiedlich. Die Teilstatorkerne 16a-d sind dabei zueinander in Umfangsrichtung derart versetzt, dass beim Übergang zwischen zwei unmittelbar benachbarten Paaren von Teilstatorkernen 16a-d eine Änderung der relativen Winkelposition der Nutöffnungen 13 bei einer jeweiligen der mehreren Nuten 9a-d realisiert ist. Bei dem Ausführungsbeispiel gemäß Fig. 8 weisen die Nuten 9a-d bei allen Teilstatorkernen 16a-d die gleiche Geometrie auf. Die Änderung der relativen Winkelposition wird dadurch erreicht, dass die Teilstatorkerne 16a-d mit einem Versatz in Umfangsrichtung um jeweils eine Nutteilung in der Axialrichtung aneinander gesetzt sind. Dadurch bildet die Nutgeometrie, die in Fig. 8 an der ersten Stirnseite 10 bzw. im Teilstatorkern 16a zur Nut 9b gehört, im in axialer Richtung folgenden Teilstatorkern 16b die Nut 9a aus. Entsprechend bildet die in Fig. 8 an der ersten Stirnseite 10 zur Nut 9c gehörende Nutgeometrie im Teilstatorkern 16c die Nut 9a aus usw., sodass entlang der Axialrichtung eine Veränderung der relativen Winkelpositionen der Nutöffnung 13 einer jeweiligen Nut 9a-d entsteht.

Gemäß einem weiteren Ausführungsbeispiel können die Nutgeometrien gemäß Fig. 2 und Fig. 8 auch kombiniert werden.

Im Rahmen eines Ausführungsbeispiels eines Verfahrens zur Herstellung eines Statorkerns 3 ist vorgesehen, dass ein Werkzeug verwendet wird, welches zum Ausbilden der Nuten 9 einen ersten Werkzeugteil zum Ausbilden des Aufnahmeabschnitts 12 einer jeweiligen Nut 9 und einen gegenüber dem ersten Werkzeugteil beweglich angeordneten zweiten Werkzeugteil zum Ausbilden der Nutöffnungen 13 an ihren unterschiedlichen relativen Winkelpositionen bezüglich dem jeweiligen Aufnahmeabschnitt 12 aufweist. Dazu zeigt Fig. 5 schematisch einen Stanzbereich 27 des zweiten Werkzeugteils.

Wieder mit Bezug zu Fig. 1 ist die Statorwicklung des Stators 2 als Haarnadelwicklung ausgebildet. D. h., dass in einem jeweiligen Aufnahmeabschnitt 12 einer der Nuten 9 eine vorgegebene Anzahl von Formleitern 28, hier exemplarisch 4 Stück, angeordnet ist. Wie in Fig. 2 schematisch dargestellt weisen die Formleiter 28 einen abgerundet rechteckigen Querschnitt auf und sind in mehreren Schichten, hier exemplarisch vier Schichten, innerhalb eines jeweiligen Aufnahmeabschnitt 12 angeordnet. Dadurch, dass die Aufnahmeabschnitte 12 parallel zur Längsachse 7 verlaufen, können die ebenfalls geraden Formleiter 28 einfach in den Nuten 9 aufgenommen werden. Eine Schrägung des Stators 2 wird dabei durch die veränderliche relative Winkelposition der Nutöffnung 13 einer jeweiligen Nut 9 emuliert. D. h., dass beim Betrieb der elektrischen Maschine 1 erzeugte Drehfeld entspricht im Wesentlichen dem eines Stators, bei dem die gesamte Nut entlang der Axialrichtung an unterschiedlichen Winkelposition ausgebildet ist.

Wie ferner aus Fig. 1 ersichtlich ist, sind die Formleiter 28 an einer der Stirnseiten, hier der ersten Stirnseite 10, durch Verbinder erster Art 29 zu wenigstens einer Reihenschaltung je Phase des Stators 2 elektrisch miteinander verbunden. Ein jeweiliger Verbinder erste Art 29 weist einen gebogenen Abschnitt auf, der von der ersten Stirnseite 10 nach außen in Axialrichtung - vom Statorkern 3 wegweisend - absteht und einstückig mit den beiden durch den Verbinder erster Art 29 verbundenen Formleitern 28 ausgebildet ist. An der anderen der Stirnseiten, hier an der zweiten Stirnseite 11, sind Verbinder zweiter Art 30 vorgesehen. Ein jeweiliger Verbinder zweiter Art 30 ist durch zwei einstückig mit Formleitern 28, die nicht durch Verbinder erster Art 29 verbunden sind, ausgebildete Verbindungabschnitte, die miteinander stoffschlüssig durch Schweißen verbunden sind, gebildet.

Der Rotor 5 der elektrischen Maschine 1, die exemplarisch als Synchronmaschine ausgebildet ist, ist permanenterregt. Gemäß einem Ausführungsbeispiel der elektrischen Maschine 1, welches bevorzugt den Stator 2 gemäß dem ersten Ausführungsbeispiel aufweist, ist der Rotor ungeschrägt ausgebildet.

Gemäß einem weiteren Ausführungsbeispiel einer elektrischen Maschine 1, welches bevorzugt den Stator 2 gemäß dem zweiten oder dritten Ausführungsbeispiel aufweist, ist der Rotor 5 einfach gestuft-geschrägt ausgebildet, wobei in Fig. 7 schematisch eine zwischen zwei Rotorteilen ausgebildete Stufe des Rotors 5 durch gestrichelten Linien 31, 32 dargestellt ist. Entlang der Linien 31, 32 erstrecken sich Permanentmagnete, die einen Pol des Rotors 5 ausbilden. Dabei kann durch den pfeilförmigen, eine halbe Nutteilung des Stators 2 umfassenden Verlauf der Nutöffnungen 13 und die durch die Linien 31, 32 gezeigte Stufung des Rotors 5, die einer halben Nutteilung des Stators 2 entspricht, eine weitgehende Reduktion von Rastmomente erzielt werden. Alternativ zum einfach gestuft-geschrägten Rotor 5 kann dieser ungeschrägt bzw. gerade sein, wobei der Stator 2 dann bevorzugt eine Bruchlochwicklung, d.h. ein gebrochenes nicht ganzzahliges Verhältnis der Anzahl der Nuten je Pol und Phase, beispielsweise 1,5 oder 2,5, aufweist. Durch die Kombination einer Schrägung des Stators 2, die geringer als eine ganze Nutteilung ist, mit dem geschrägten Rotor 5 oder der Bruchlochwicklung kann dennoch eine Gesamtschrägung der elektrischen Maschine von einer ganzen Nutteilung erreicht werden.

Fig. 9 ist eine Prinzipskizze eines Fahrzeugs 35, welches eine elektrische Maschine 1 zum Antreiben des Fahrzeugs 35 aufweist. Die elektrische Maschine 1 bildet einen Teil eines Antriebsstrang des als batterieelelektrisches Fahrzeugs (BEV) oder als Hybridfahrzeug ausgebildeten Fahrzeugs 35 aus.

## Patentansprüche

1. Statorkern (3) für einen Stator (2) einer elektrischen Maschine (1), aufweisend:
- einen Rotoraufnahmeraum (4), der den Statorkern (3) entlang einer Axialrichtung durchsetzt; und
- mehrere Nuten (9, 9a-d), die
- in Umfangsrichtung aufeinanderfolgend im Statorkern (3) ausgebildet sind,
- den Statorkern (3) von einer ersten Stirnseite (10) zu einer gegenüberliegenden zweiten Stirnseite (11) des Statorkerns (3) axial durchsetzen, und
- jeweils einen Aufnahmeabschnitt (12), in welchem eine Statorwicklung des Stators (2) aufnehmbar ist, und eine Nutöffnung (13), welche an einer Radialposition zwischen dem Aufnahmeabschnitt (12) und dem Rotoraufnahmeraum (4) ausgebildet und entlang der Axialrichtung zueinander versetzte relative Winkelpositionen bezüglich des Aufnahmeabschnitts (12) aufweist, aufweisen,
wobei die Nutöffnung (13) eine erste Wand (19) und eine der ersten Wand (19) von der ersten Stirnseite (10) aus betrachtet im Uhrzeigersinn gegenüberliegende zweite Wand (20) aufweist und der Aufnahmeabschnitt (12) eine erste Wand (17) und eine der ersten Wand (17) von der ersten Stirnseite (10) aus betrachtet im Uhrzeigersinn gegenüberliegende zweite Wand (18) aufweist, wobei
- an einer ersten der zwei äußersten relativen Winkelpositionen der Nutöffnung (13) eine Winkelposition der ersten Wand (17) des Aufnahmeabschnitts (12) zwischen Winkelpositionen der ersten Wand (19) und der zweiten Wand (20) der Nutöffnung (13) liegt und an einer zweiten der zwei äußersten relativen Winkelpositionen eine Winkelposition der zweiten Wand (18) des Aufnahmeabschnitts (12) zwischen Winkelpositionen der ersten Wand (19) und der zweiten Wand (20) der Nutöffnung (13) liegt oder
- an den zwei äußersten relativen Winkelpositionen der Nutöffnung (13) ein durch die Wände (17, 18) des Aufnahmeabschnitts (12) aufgespannter erster Winkelbereich und ein durch die Wände (19, 20) der Nutöffnung (13) aufgespannter zweiter Winkelbereich überscheidungsfrei sind und die Nutöffnung (13) an den zwei äußersten Winkelpositionen außerhalb des ersten Winkelbereichs liegt.

2. Statorkern nach Anspruch 1, wobei
die relativen Winkelpositionen der Nutöffnung (13) von der ersten Stirnseite (10) bis zu einer axialen Zwischenposition (15) zwischen der ersten Stirnseite (10) und der zweiten Stirnseite (12) entlang desselben Umlaufsinns zueinander versetzt sind.

3. Statorkern nach Anspruch 2, wobei
die relativen Winkelpositionen der Nutöffnung (13) von der Zwischenposition (15) bis zur zweiten Stirnseite (11)
- entlang desselben Umlaufsinns wie die relativen Winkelpositionen von der ersten Stirnseite (10) bis zur axialen Zwischenposition (15) oder
- entlang eines Umlaufsinns, der dem Umlaufsinn von der ersten Stirnseite (10) bis zur axialen Zwischenposition (15) entgegengesetzt ist,
zueinander versetzt sind.

4. Statorkern nach einem der vorhergehenden Ansprüche, wobei
der Statorkern (3) entlang der Axialrichtung in mehrere Teilstatorkerne (16a-d) untergliedert ist und sich die relative Winkelposition der Nutöffnung (13) einer jeweiligen **Nut** (9, 9a-d) beim Übergang von einem Teilstatorkern (16a-c) zum in der Axialrichtung benachbarten Teilstatorkern (16b-d) ändert.

5. Statorkern nach Anspruch 4, wobei
der Statorkern (3) aus einer Vielzahl von axial geschichteten Einzelblechen (8) ausgebildet ist, wobei
- jeder Teilstatorkern (16a-d) durch mehrere der Einzelbleche (8) ausgebildet ist oder
- jeder Teilstatorkern aus genau einem Einzelblech (8) ausgebildet ist.

6. Statorkern nach Anspruch 4 oder 5, wobei
die Nutöffnungen (13) der Nuten (9, 9a-d) entlang eines jeweiligen Teilstatorkerns (16a-d) parallel zueinander in Axialrichtung verlaufen.

7. Statorkern nach einem Ansprüche 4 bis 6, wobei
- die relativen Winkelpositionen der Nutöffnungen (13) mehrerer der Nuten (9, 9a-d) innerhalb eines jeweiligen Teilstatorkerns (16a-d) identisch und bei unmittelbar benachbarten Paaren der Teilstatorkerne (16a-d) unterschiedlich sind und/oder
- die relativen Winkelpositionen der Nutöffnungen (13) mehrerer der Nuten (9, 9a-d) innerhalb eines jeweiligen Teilstatorkerns (16a-d) unterschiedlich sind und die Teilstatorkerne (16a-d) zueinander derart in Umfangsrichtung versetzt sind, dass beim Übergang zwischen zwei unmittelbar benachbarten Paaren von Teilstatorkernen (16a-d) eine Änderung der relativen Winkelposition der Nutöffnungen (13) einer jeweiligen der mehreren der Nuten (9, 9a-d) realisiert ist.

8. Statorkern nach einem der vorhergehenden Ansprüche, wobei
die Nutöffnung (13) eine geringere Erstreckung in Umfangsrichtung als der Aufnahmeabschnitt (12) aufweist, wobei eine jeweilige Nut (9, 9a-d) einen radial zwischen dem Aufnahmeabschnitt (12) und der Nutöffnung (13) angeordneten Übergangsabschnitt (21) aufweist, der den Aufnahmeabschnitt (12) und die Nutöffnung (13) verbindet.

9. Verfahren zur Herstellung eines Statorkerns (3) nach einem der vorhergehenden Ansprüche, wobei ein Werkzeug verwendet wird, welches zum Ausbilden der Nuten (9, 9a-d), insbesondere durch Stanzen, einen ersten Werkzeugteil zum Ausbilden des Aufnahmeabschnitts (12) einer jeweiligen Nut (9, 9a-d) und einen gegenüber dem ersten Werkzeugteil beweglich angeordneten zweiten Werkzeugteil (27) zum Ausbilden der Nutöffnung (13) an ihren unterschiedlichen relativen Winkelpositionen bezüglich dem jeweiligen Aufnahmeabschnitt (12) aufweist.

10. Stator (2) für eine elektrische Maschine (1), umfassend einen Statorkern (3) nach einem der Ansprüche 1 bis 8 oder einen durch ein Verfahren nach Anspruch 9 erhaltenen Statorkern (3) und eine Statorwicklung, die im Aufnahmeabschnitt (12) einer jeweiligen Nut (9, 9a-d) aufgenommen ist.

11. Stator nach Anspruch 10, wobei
die Statorwicklung durch Formleiter (28) ausgebildet ist und im Aufnahmeabschnitt (12) einer jeweiligen Nut (9, 9a-d) eine vorgegebene Anzahl von in Radialrichtung gestapelt angeordneten, sich insbesondere parallel zu einer Längsachse (7) des Statorkerns (3) ersteckenden, Formleitern (28) aufgenommen ist.

12. Stator nach Anspruch 10 oder 11, wobei
die Statorwicklung ein gebrochenes, nicht ganzzahliges Verhältnis der Anzahl der Nuten (9, 9a-d) je Pol und Phase aufweist.

13. Elektrische Maschine (1) zum Antreiben eines Fahrzeugs (35), umfassend einen Stator (2) nach einem der Ansprüche 10 bis 12 und einen drehbar im Rotoraufnahmeraum (4) gelagerten, insbesondere permanenterregten, Rotor (5).

14. Elektrische Maschine nach Anspruch 13, wobei
der Rotor (5) ungeschrägt oder, insbesondere um eine halbe Nutteilung des Stators (2), geschrägt ausgebildet ist.

## Claims

1. **A stator** core (3) for a stator (2) of an electric machine (1), comprising:
• a rotor receiving space (4) extending through the stator core (3) along an axial direction; and
• a plurality of slots (9, 9a-d) formed sequentially in a circumferential direction in the stator core (3),
• axially extending through the stator core (3) from a first end face (10) to an opposite second end face (11) of the stator core (3), and
• each having a receiving section (12) in which a stator winding of the stator (2) is receivable, and a slot opening (13) which is formed at a radial position between the receiving section (12) and the rotor receiving space (4) and has relative angular positions offset with respect to one another along the axial direction relative to the receiving section (12),
• wherein the slot opening (13) has a first wall (19) and a second wall (20) opposite the first wall (19) in a clockwise direction when viewed from the first end face (10), and the receiving section (12) has a first wall (17) and a second wall (18) opposite the first wall (17) in a clockwise direction when viewed from the first end face (10), wherein:
∘ at a first of the two outermost relative angular positions of the slot opening (13), an angular position of the first wall (17) of the receiving section (12) lies between angular positions of the first wall (19) and the second wall (20) of the slot opening (13), and at a second of the two outermost relative angular positions, an angular position of the second wall (18) of the receiving section (12) lies between angular positions of the first wall (19) and the second wall (20) of the slot opening (13), or
∘ at the two outermost relative angular positions of the slot opening (13), a first angular range spanned by the walls (17, 18) of the receiving section (12) and a second angular range spanned by the walls (19, 20) of the slot opening (13) are non-overlapping, and the slot opening (13) lies outside the first angular range at the two outermost angular positions.

2. The stator core according to claim 1, wherein the relative angular positions of the slot opening (13) are offset with respect to one another along the same direction of rotation from the first end face (10) to an axial intermediate position (15) between the first end face (10) and the second end face (12).

3. The stator core according to claim 2, wherein the relative angular positions of the slot opening (13) from the intermediate position (15) to the second end face (11) are offset with respect to one another:
• along the same direction of rotation as the relative angular positions from the first end face (10) to the axial intermediate position (15), or
• along a direction of rotation opposite to the direction of rotation from the first end face (10) to the axial intermediate position (15).

4. The stator core according to any one of the preceding claims, wherein the stator core (3) is subdivided along the axial direction into a plurality of partial stator cores (16a-d), and the relative angular position of the slot opening (13) of a respective slot (9, 9a-d) changes at the transition from one partial stator core (16a-c) to the partial stator core (16b-d) adjacent in the axial direction.

5. The stator core according to claim 4, wherein the stator core (3) is formed from a plurality of axially laminated individual laminations (8), wherein:
• each partial stator core (16a-d) is formed by several of the individual laminations (8), or
• each partial stator core is formed from exactly one individual lamination (8).

6. The stator core according to claim 4 or 5, wherein the slot openings (13) of the slots (9, 9a-d) extend parallel to one another in the axial direction along a respective partial stator core (16a-d).

7. The stator core according to any one of claims 4 to 6, wherein:
• the relative angular positions of the slot openings (13) of a plurality of the slots (9, 9a-d) within a respective partial stator core (16a-d) are identical and are different for directly adjacent pairs of the partial stator cores (16a-d), and/or
• the relative angular positions of the slot openings (13) of a plurality of the slots (9, 9a-d) within a respective partial stator core (16a-d) are different, and the partial stator cores (16a-d) are offset relative to one another in the circumferential direction such that a change in the relative angular position of the slot openings (13) of a respective one of the plurality of slots (9, 9a-d) is realized at the transition between two directly adjacent pairs of partial stator cores (16a-d).

8. The stator core according to any one of the preceding claims, wherein the slot opening (13) has a smaller extension in the circumferential direction than the receiving section (12), wherein a respective slot (9, 9a-d) has a transition section (21) arranged radially between the receiving section (12) and the slot opening (13), which transition section connects the receiving section (12) and the slot opening (13).

9. A method for manufacturing a stator core (3) according to any one of the preceding claims, wherein a tool is used which, for forming the slots (9, 9a-d), in particular by punching, comprises a first tool part for forming the receiving section (12) of a respective slot (9, 9a-d) and a second tool part (27) arranged movably relative to the first tool part for forming the slot opening (13) at its different relative angular positions with respect to the respective receiving section (12).

10. A stator (2) for an electric machine (1), comprising a stator core (3) according to any one of claims 1 to 8 or a stator core (3) obtained by a method according to claim 9, and a stator winding which is received in the receiving section (12) of a respective slot (9, 9a-d).

11. The stator according to claim 10, wherein the stator winding is formed by bar conductors (28) and a predetermined number of bar conductors (28) arranged stacked in the radial direction and extending in particular parallel to a langing axis (7) of the stator core (3) is received in the receiving section (12) of a respective slot (9, 9a-d).

12. The stator according to claim 10 or 11, wherein the stator winding has a fractional, non-integer ratio of the number of slots (9, 9a-d) per pole and phase.

13. An electric machine (1) for driving a vehicle (35), comprising a stator (2) according to any one of claims 10 to 12 and a rotor (5) rotatably mounted in the rotor receiving space (4), in particular a permanently excited rotor.

14. The electric machine according to claim 13, wherein the rotor (5) is unskewed or is skewed, in particular by half a slot pitch of the stator (2).

## Revendications

1. Noyau de stator (3) pour un stator (2) d'une machine électrique (1), comprenant :
• un espace de réception de rotor (4) qui traverse le noyau de stator (3) le long d'une direction axiale; et
• plusieurs encoches (9, 9a-d) formées successivement dans la direction circonférentielle dans le noyau de stator (3),
• traversant axialement le noyau de stator (3) depuis une première face frontale (10) jusqu'à une deuxième face frontale (11) opposée du noyau de stator (3), et
• présentant chacune une section de réception (12), dans laquelle un enroulement de stator du stator (2) peut être reçu, et une ouverture d'encoche (13), laquelle est formée au niveau d'une position radiale entre la section de réception (12) and l'espace de réception de rotor (4) et présente des positions angulaires relatives décalées les unes par rapport aux autres le long de la direction axiale par rapport à la section de réception (12),
• dans lequel l'ouverture d'encoche (13) présente une première paroi (19) et une deuxième paroi (20) opposée à la première paroi (19) dans le sens des aiguilles d'une montre en regardant depuis la première face frontale (10), et la section de réception (12) présente une première paroi (17) et une deuxième paroi (18) opposée à la première paroi (17) dans le sens des aiguilles d'une montre en regardant depuis la première face frontale (10), dans lequel :
∘ au niveau d'une première des deux positions angulaires relatives les plus extérieures de l'ouverture d'encoche (13), une position angulaire de la première paroi (17) de la section de réception (12) se situe entre des positions angulaires de la première paroi (19) et de la deuxième paroi (20) de l'ouverture d'encoche (13), et au niveau d'une deuxième des deux positions angulaires relatives les plus extérieures, une position angulaire de la deuxième paroi (18) de la section de réception (12) se situe entre des positions angulaires de la première paroi (19) et de la deuxième paroi (20) de l'ouverture d'encoche (13), ou
∘ au niveau des deux positions angulaires relatives les plus extérieures de l'ouverture d'encoche (13), une première plage angulaire délimitée par les parois (17, 18) de la section de réception (12) et une deuxième plage angulaire délimitée par les parois (19, 20) de l'ouverture d'encoche (13) sont sans chevauchement, et l'ouverture d'encoche (13) se situe en dehors de la première plage angulaire au niveau des deux positions angulaires les plus extérieures.

2. Noyau de stator selon la revendication 1, dans lequel les positions angulaires relatives de l'ouverture d'encoche (13) sont décalées les unes par rapport aux autres le long du même sens de rotation depuis la première face frontale (10) jusqu'à une position intermédiaire axiale (15) entre la première face frontale (10) et la deuxième face frontale (12).

3. Noyau de stator selon la revendication 2, dans lequel les positions angulaires relatives de l'ouverture d'encoche (13) depuis la position intermédiaire (15) jusqu'à la deuxième face frontale (11) sont décalées les unes par rapport aux autres :
• le long du même sens de rotation que les positions angulaires relatives depuis la première face frontale (10) jusqu'à la position intermédiaire axiale (15), ou
• le long d'un sens de rotation qui est opposé au sens de rotation allant de la première face frontale (10) jusqu'à la position intermédiaire axiale (15).

4. Noyau de stator selon l'une des revendications précédentes, dans lequel le noyau de stator (3) est subdivisé le long de la direction axiale en plusieurs noyaux de stator partiels (16ad), et la position angulaire relative de l'ouverture d'encoche (13) d'une encoche (9, 9a-d) respective change lors de la transition d'un noyau de stator partiel (16a-c) au noyau de stator partiel (16b-d) adjacent dans la direction axiale.

5. Noyau de stator selon la revendication 4, dans lequel le noyau de stator (3) est formé à partir d'une pluralité de tôles individuelles (8) empilées axialement, dans lequel :
• chaque noyau de stator partiel (16a-d) est formé par plusieurs des tôles individuelles (8), ou
• chaque noyau de stator partiel est formé d'exactement une tôle individuelle (8).

6. Noyau de stator selon la revendication 4 ou 5, dans lequel les ouvertures d'encoche (13) des encoches (9, 9a-d) s'étendent parallèlement les unes aux autres dans la direction axiale le long d'un noyau de stator partiel (16a-d) respectif.

7. Noyau de stator selon l'une des revendications 4 à 6, dans lequel :
• les positions angulaires relatives des ouvertures d'encoche (13) de plusieurs des encoches (9, 9a-d) à l'intérieur d'un noyau de stator partiel (16a-d) respectif sont identiques, et sont différentes pour des paires directement adjacentes de noyaux de stator partiels (16a-d), et/ou
• les positions angulaires relatives des ouvertures d'encoche (13) de plusieurs des encoches (9, 9a-d) à l'intérieur d'un noyau de stator partiel (16a-d) respectif sont différentes, et les noyaux de stator partiels (16a-d) sont décalés les uns par rapport aux autres dans la direction circonférentielle de telle sorte que, lors de la transition entre deux paires directement adjacentes de noyaux de stator partiels (16a-d), un changement de la position angulaire relative des ouvertures d'encoche (13) d'une encoche respective parmi la pluralité d'encoches (9, 9a-d) soit réalisé.

8. Noyau de stator selon l'une des revendications précédentes, dans lequel l'ouverture d'encoche (13) présente une étendue dans la direction circonférentielle plus petite que celle de la section de réception (12), dans lequel une encoche (9, 9a-d) respective présente une section de transition (21) disposée radialement entre la section de réception (12) et l'ouverture d'encoche (13), laquelle section de transition relie la section de réception (12) et l'ouverture d'encoche (13).

9. Procédé de fabrication d'un noyau de stator (3) selon l'une des revendications précédentes, dans lequel il est utilisé un outil qui, pour former les encoches (9, 9a-d), en particulier par découpage/poinçonnage, comprend une première partie d'outil pour former la section de réception (12) d'une encoche (9, 9a-d) respective et une deuxième partie d'outil (27) disposée mobile par rapport à la première partie d'outil pour former l'ouverture d'encoche (13) au niveau de ses différentes positions angulaires relatives par rapport à la section de réception (12) respective.

10. Stator (2) pour une machine électrique (1), comprenant un noyau de stator (3) selon l'une des revendications 1 à 8 ou un noyau de stator (3) obtenu par un procédé selon la revendication 9, et un enroulement de stator qui est reçu dans la section de réception (12) d'une encoche (9, 9a-d) respective.

11. Stator selon la revendication 10, dans lequel l'enroulement de stator est formé par des conducteurs préformés (28), et un nombre prédéterminé de conducteurs préformés (28) disposés empilés dans la direction radiale et s'étendant en particulier parallèlement à un axe longitudinal (7) du noyau de stator (3) est reçu dans la section de réception (12) d'une encoche (9, 9a-d) respective.

12. Stator selon la revendication 10 ou 11, dans lequel l'enroulement de stator présente un rapport fractionnaire, non entier, du nombre d'encoches (9, 9a-d) par pôle et par phase.

13. Machine électrique (1) pour l'entraînement d'un véhicule (35), comprenant un stator (2) selon l'une des revendications 10 à 12 et un rotor (5) monté rotatif dans l'espace de réception de rotor (4), en particulier un rotor à excitation permanente.

14. Machine électrique selon la revendication 13, dans laquelle le rotor (5) est non incliné (sans biais) ou est incliné (biaisé), en particulier de la moitié d'un pas d'encoche du stator (2).
